# EUROPEAN PATENT SPECIFICATION

(11) **EP 3 875 054 B1**
(45) Date of publication and mention of the grant of the patent: **03.07.2024**
(21) Application number: 18938233.6
(22) Date of filing: 01.11.2018
(51) Int. Cl.: A61C 11/00, A61C 11/08, A61C 13/34, A61C 13/00, A61C 19/05, A61C 9/00

(54) **DIGITAL THREE-DIMENSIONAL TOOTH MODEL SYSTEM**
DIGITALES DREIDIMENSIONALES ZAHNMODELLSYSTEM
SYSTÈME DE MODÈLE DE DENT NUMÉRIQUE EN TROIS DIMENSIONS

(43) Date of publication of application: 08.09.2021
(73) Proprietor: Lee, Woo Hyoung, Yangju-si, Gyeonggi-do 11486 (KR)
(72) Inventor: Lee, Woo Hyoung, Yangju-si, Gyeonggi-do 11486 (KR)
(74) Representative: Frenkel, Matthias Alexander
(86) International application number: PCT/KR2018/013214
(87) International publication number: WO 2020/091115

(56) References cited:
- JP-A- 2004 129 890
- KR-A- 20130 014 630
- KR-A- 20130 048 202
- KR-A- 20170 113 300
- KR-B1- 101 509 231
- KR-B1- 101 913 248

## Description

### [Technical Field]

The present invention relates to a digital three-dimensional tooth model system and, more particularly, a digital three-dimensional tooth model system that can increase accuracy by accurately positioning a tooth model in a specific scan region, using a tooth model scanner required to fabricate a digital three-dimensional tooth model at a dental clinic or a dental laboratory, and that enables smooth mastication and good pronunciation by enabling tooth models to be quickly and accurately engaged at ideal positions through modularization of a digital three-dimensional model and a reference line that enables positioning at anatomically ideal positions.

### [Background Art]

In general, since teeth have a close connection with important functions of human such as ingestion in the mouth, pronunciation, and making a facial expression, so missing of tooth is a critical problem. A device for reconstructing the mouth with missing teeth is called a dental prosthesis. In order to fabricate dental prostheses or artificial teeth, a method that uses a digital tooth design program that is a kind of 3D CAD programs is recently generally used.

Such a digital tooth design program undergoes a process of scanning a tooth model using a tooth model scanner that is a kind of 3D scanners to design teeth using a 3D CAD program.

That is, a virtual 3D tooth model of the tooth model of a patient is formed using a tooth model scanner, the virtual 3D tooth model is output on the digital tooth design program, and an artificial tooth is designed on the basis of the virtual 3D tooth model.

Accordingly, the process of digitalizing a tooth model using a tooth model scanner is a very important process, so it is required to accurately record the positions and shapes of tissues and teeth in the mouth which are needed for fabricating artificial teeth.

However, according to scanning methods of the related art, since scanning is performed at different positions, a plaster model digitalized through scanning changes in position even in a digital tooth design program, so a virtual 3D model not similar to a human body is provided when an artificial tooth is designed, thereby causing many problems including an optical illusion when an artificial tooth is designed.

Such structure and method make it impossible to fabricate a satisfactory tooth.

Artificial teeth are fabricated on the basis of anatomical references, that is, on the basis of the balkwill triangle connecting the mandibular condyle and the incisal edge of a lower incisor, the camper's plane connecting the incisal edge of a mandibular central incisor and the retromolar trigone, and the fh line connecting the lower edge of the ala nasi of the upper jawbone and the lower edge of the external auditory canal. These reference lines or surfaces are provided for recording and fabricating an accurate occlusion plane.

An accurate occlusion surface means that teeth and surrounding tissues are positioned at the anatomically correct positions.

A digital artificial tooth fabricated without these reference points may not be positioned at the accurate anatomical position, so there is a problem that an incorrect dental prosthesis may be fabricated by digital dental design.

In the related art, there are Korean Patent No. 10-1141750 (titled "Manufacturing method of dental implant", registered on April 24, 2012) and Korean Patent No. 10-1290278 (titled "Composition for coating the artificial denture teeth and manufacturing method of artificial denture teeth using the composition, registered on July 22, 2013).

KR 10-1913248 B1 relates to an artificial tooth fabrication system for scanning a dental model, comprising an occluder in which a dental model to be scanned is mounted in a scanning area of a dental model scanner that scans the dental model to generate virtual 3D dental model data and an output unit that is coupled to said occluder and that outputs an image by matching positional data of the dental model scanned by said dental model scanner with data stored in an anatomically idealized position.

### [Disclosure]

### [Technical Problem]

The present invention has been made in an effort to solve the problems of the related art described above and an object of the present invention is to provide a digital three-dimensional tooth model system that can increase accuracy by accurately positioning a tooth model in a specific scan region, using a tooth model scanner required to fabricate a digital three-dimensional tooth model at a dental clinic or a dental laboratory, and that enables smooth mastication and good pronunciation by enabling tooth models to be quickly and accurately engaged at ideal positions through modularization of a digital three-dimensional model and a reference line that enables positioning at anatomically ideal positions.

Other objects of the present invention can be understood through the characteristics of the present invention, can be made clearer through embodiments of the present invention, and can be achieved by means and combinations in claims.

### [Technical Solution]

In order to achieve the objects, the present disclosure has the following technical features.

A digital three-dimensional tooth model system according to the present invention includes: an articulator mounted in a scan region of a tooth model scanner that creates virtual 3D tooth model data by scanning a tooth model and having a tooth model to be scanned installed thereon; an output unit connected to the articulator and matching and outputting position data of a tooth model scanned by the tooth model scanner and data storing anatomically ideal positions on an image; a reference mark composed of lines that can be vertically and horizontally analyzed; a tooth model unit composed of an upper jawbone tooth model and a lower jawbone tooth model designed by a digital tooth design program, and having modules each composed of the reference mark and the upper jawbone tooth model and the lower jawbone tooth model, respectively; and a tooth analyzer disposed between the upper jawbone tooth model and the lower jawbone tooth model, wherein the reference mark is divided into a first part modularized into a part with the upper j awbone tooth model, a second part modularized into a part with the lower jawbone tooth model and a third part modularized into a part with the tooth analyzer.

The digital three-dimensional tooth model system according to the present invention further includes a controller connected to the reference mark, the tooth model unit, and the tooth analyzer, in which the controller simultaneously or selectively modularizes and controls the reference mark, the tooth model unit, and the tooth analyzer.

In the digital three-dimensional tooth model system according to the present invention, the articulator includes: a scanner mount plate detachably installed in the scan region of the tooth model scanner; a jig body formed on the scanner mount plate and having a tooth model installed thereon; and an oral record transmitter composed of a vertical part vertically formed at the front end of the scanner mount plate and positioned at the dead center of the front of the tooth model installed on the jig body and a position reference pointer perpendicularly coupled to the vertical part in a longitudinally movable pin type and having an end that comes in contact with the end of the incisor of the lower jawbone or the end of the incisor of the upper jawbone of the tooth model.

In the digital three-dimensional tooth model system according to the present invention, when the upper jawbone tooth model and the lower jawbone tooth model are moved, the upper jawbone tooth model and the lower jawbone tooth model are combined at an anatomically ideal position due to the reference marks respectively modularized into one part with the upper jawbone tooth model and the lower jawbone tooth model.

In the digital three-dimensional tooth model system according to the present invention, a fixing block for fixing the articulator is formed in the scanner and has a magnet, and prominences and depressions.

The digital three-dimensional tooth model system according to the present invention further includes a tooth position recorder being able to be coupled to the articulator and recording positions and angles of teeth.

In the digital three-dimensional tooth model system according to the present invention, the tooth position recorder is formed in a cross shape for accuracy of the positions and angles of teeth and is coupled to be rotatable from the articulator.

In the digital three-dimensional tooth model system according to the present invention, the tooth analyzer is formed in a plate shape with a first surface formed flat and a second surface curved, the tooth analyzer of which the first surface is formed flat comes in contact with the upper jawbone model unit, and the curved second surface comes in contact with the lower jawbone mode unit.

In the digital three-dimensional tooth model system according to the present invention, the tooth analyzer can analyze sizes and positions of the upper jawbone tooth model and the lower jawbone tooth model.

In the digital three-dimensional tooth model system according to the present invention, the tooth analyzer has pluralities of vertical grooves and horizontal grooves, thereby being able to analyze sizes and positions of the upper jawbone tooth model and the lower jawbone tooth model.

### [Advantageous Effects]

According to the present invention having the configuration described above, it is possible to increase accuracy by accurately positioning a tooth model in a peculiar scan region, using a tooth model scanner required to fabricate a digital three-dimensional tooth model at a dental clinic or a dental laboratory, and to enable smooth mastication and good pronunciation by enabling tooth models to be quickly and accurately engaged at ideal positions through modularization of a digital three-dimensional model and a reference line that enables positioning at anatomically ideal positions.

Further, according to the present invention, it is possible to easily and quickly perform designing by storing artificial tooth model STL data in an appropriate format made in advance at an anatomically ideal tooth position when designing is performed using a tooth model file stored at an appropriate position.

Further, according to the present invention, when a tooth model is scanned using a dental scanner, the work efficiency is maximized and tooth model scan data are aligned with anatomically ideal imaginary vertical and horizontal axes in a design program using an articulator for scanning. Accordingly, it is possible to maximize the work efficiency by matching individual artificial tooth digital model data stored in an artificial tooth design program, several reference digital data models required for manufacturing artificial teeth, and X, Y, and Z coordinate positions.

Further, according to the present invention, since there is provided a tooth analyzer plate, it is possible to analyze the sizes and positions of teeth, so it is possible to improve accuracy of a dental prosthesis set in the mouth.

Other objects of the present invention can be understood through the characteristics of the present invention, can be made clearer through embodiments of the present invention, and can be achieved by means and combinations in claims.

### [Description of Drawings]

FIG. 1 is a view showing an example of scanning a tooth model placed without a reference on a scanner according to the related art.
FIG. 2 is a block diagram of an example of a digital three-dimensional tooth model system according to the present invention.
FIG. 3 is a view using an articulator of a digital three-dimensional tooth model according to the present invention.
FIG. 4 is a view showing that data of scanned tooth model according to FIG. 2 are the same as the positions of artificial teeth to be fabricated by comparing them with a human body structure.
FIG. 5 is a view showing the state in which a scan original point recorder according to FIG. 2 is mounted on a scanner.
FIG. 6 is a view showing an oral tooth position recorder according to FIG. 2.
FIG. 7 is a perspective view of an example when there is a reference line in FIG. 2 such that position combination of the digital three-dimensional tooth model is possible.
FIG. 8 is a perspective view showing the state in which the digital three-dimensional tooth model according to FIG. 2 is combined at an anatomical ideal position.
FIG. 9 is a view showing the state in which a digital three-dimensional model of upper jaw teeth according to FIG. 2 is mounted on a tooth analyzer.
FIG. 10 is a view showing the state in which digital three-dimensional models of upper jaw teeth and lower jaw teeth according to FIG. 2 are normally positioned on the gums.

### [Modes of the Invention]

The following detailed description of the present invention provides specific embodiments for achieving the present invention and refers to the accompanying drawings. Like reference numerals indicate the same or similar functions in various terms in the drawings.

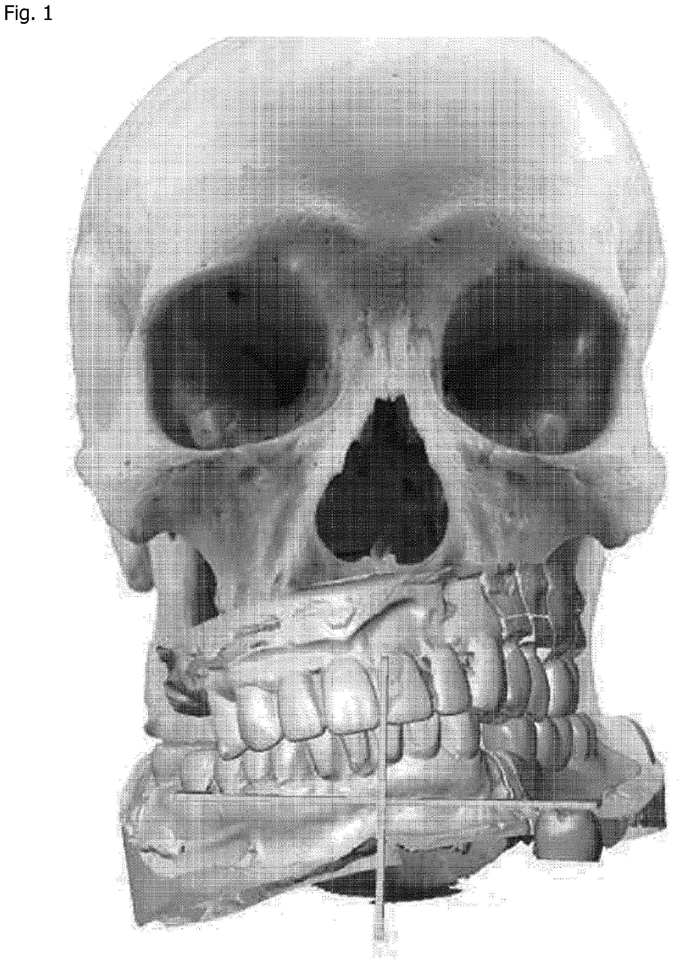

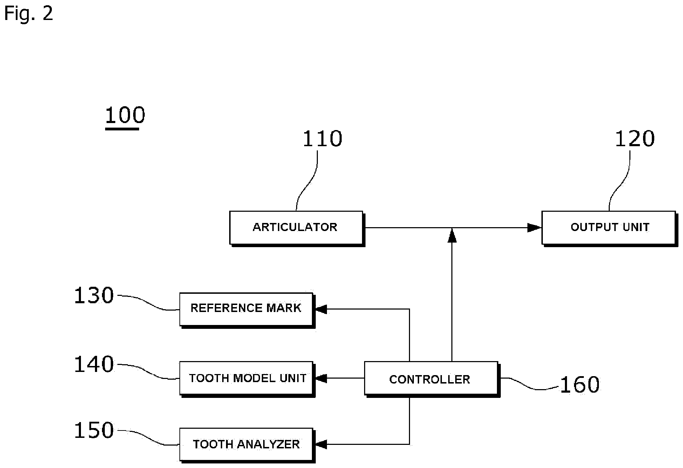

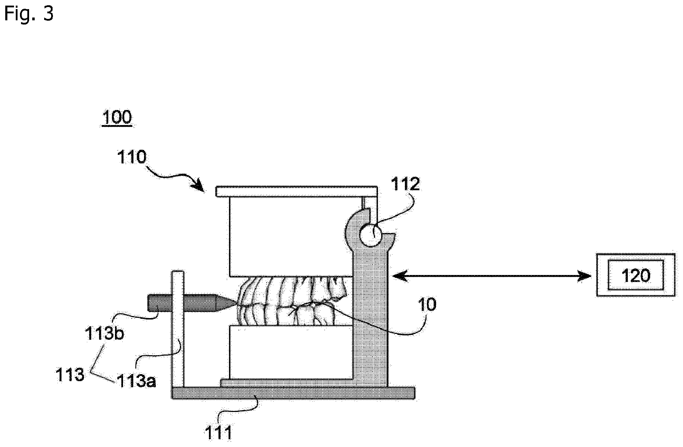

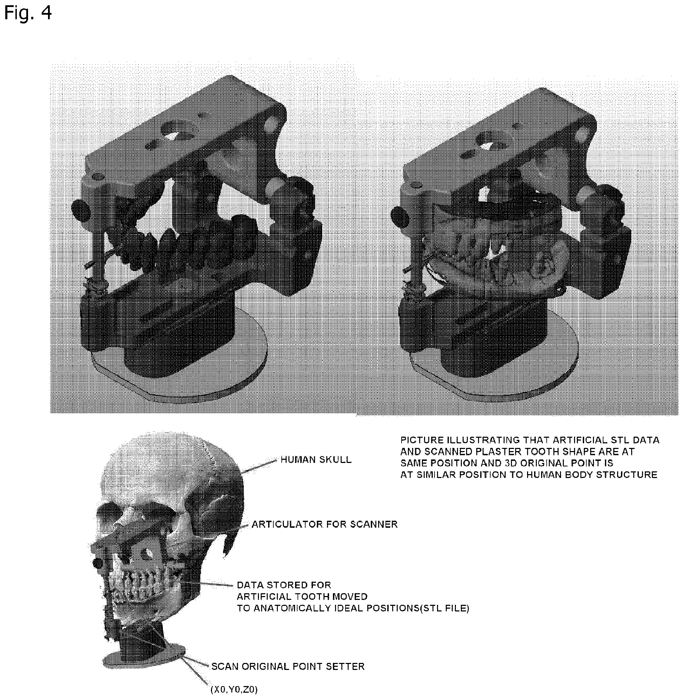

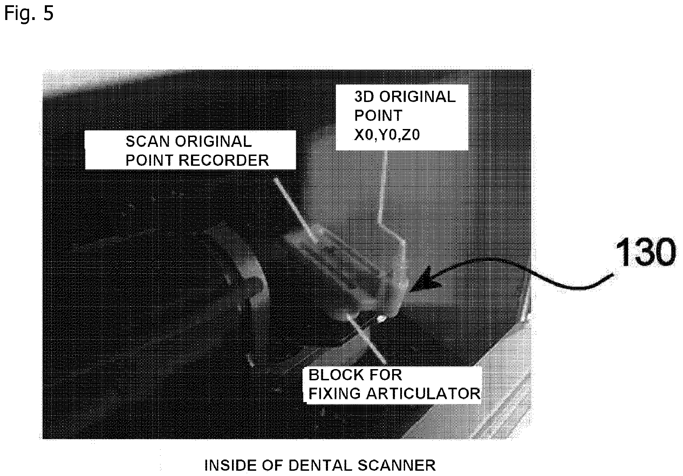

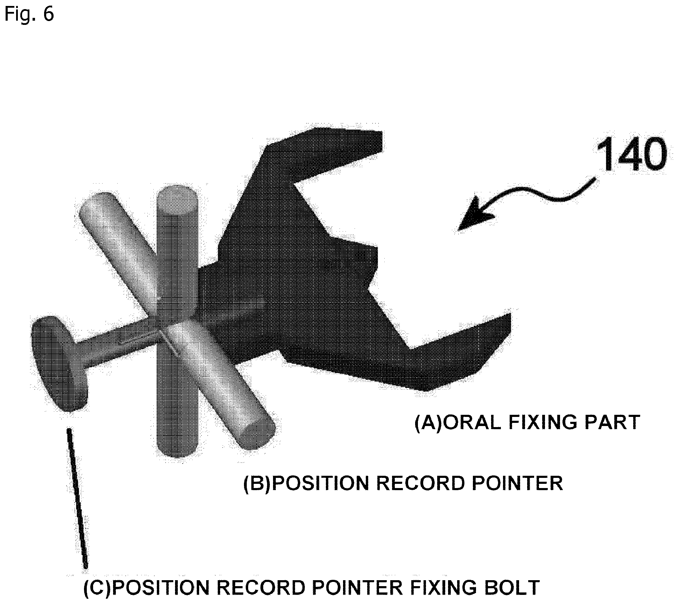

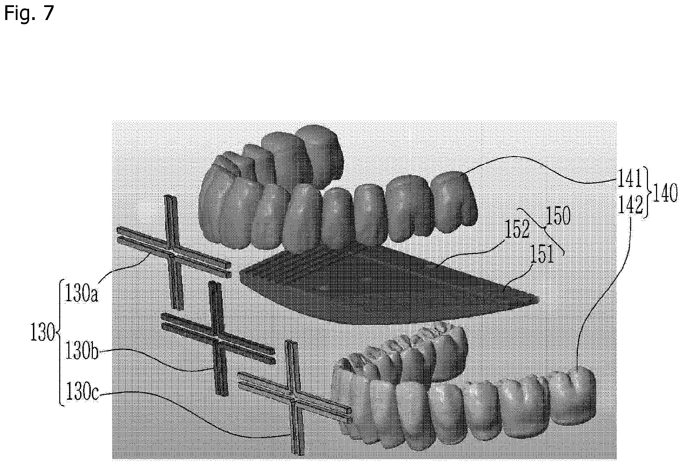

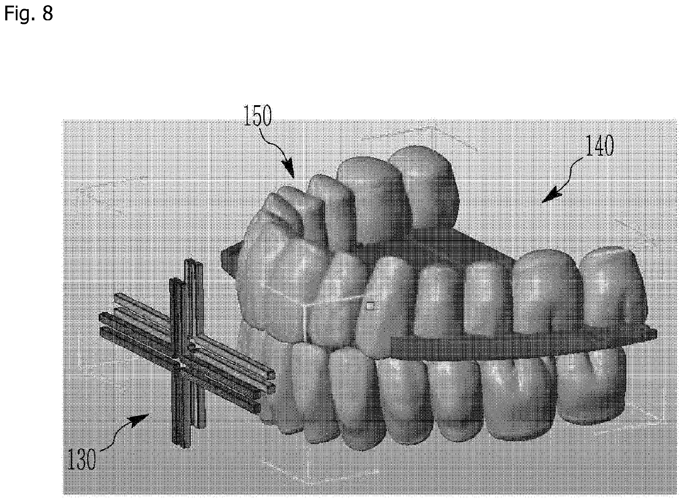

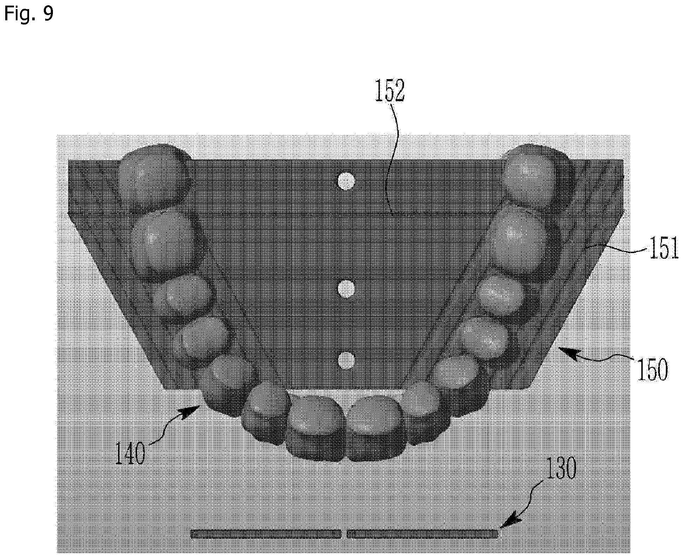

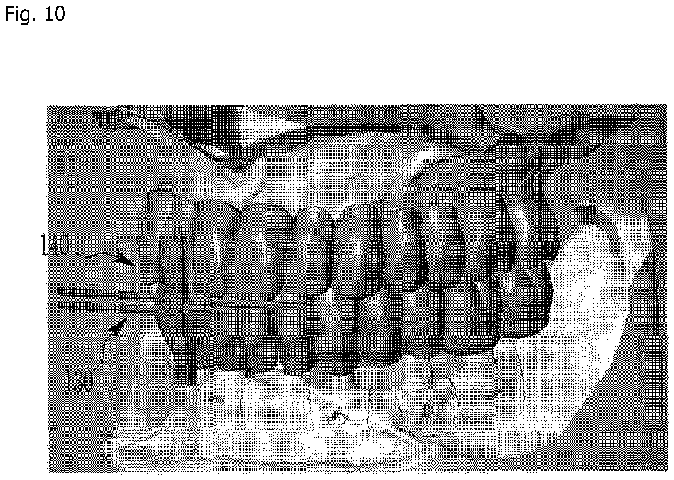

FIG. 1 is a view showing an example of scanning a tooth model placed without a reference on a scanner according to the related art, FIG. 2 is a block diagram of an embodiment of a digital three-dimensional tooth model system according to the present invention, FIG. 3 is a view using an articulator of a digital three-dimensional tooth model according to the present invention, FIG. 4 is a view showing that data of scanned tooth model according to FIG. 2 are the same as the positions of artificial teeth by comparing them with a human body structure, FIG. 5 is a view showing the state in which a scan original point recorder according to FIG. 2 is mounted on a scanner, FIG. 6 is a view showing an oral tooth position recorder according to FIG. 2, FIG. 7 is a perspective view of an example when there is a reference line in FIG. 2 such that position combination of the digital three-dimensional tooth model is possible, FIG. 8 is a perspective view showing the state in which the digital three-dimensional tooth model according to FIG. 2 is combined at an anatomical ideal position, FIG. 9 is a view showing the state in which a digital three-dimensional model of upper jaw teeth according to FIG. 2 is mounted on a tooth analyzer, and FIG. 10 is a view showing the state in which digital three-dimensional models of upper jaw teeth and lower jaw teeth according to FIG. 2 are normally positioned on the gums.

A digital three-dimensional tooth model system 100 according to the present invention, as shown in FIGS. 1 to 10, includes an articulator 110, an output unit 120, a reference mark 130, a tooth model unit 140, and a tooth analyzer 150.

The articulator 110 is mounted in a scan region of a tooth model scanner that creates virtual 3D tooth model data by scanning a tooth model and a tooth model to be scanned is installed at the articulator 110.

The tooth model articulator 110 includes a scanner mount plate 111 that is detachably installed in a scan region of a tooth model scanner, a jig body 112 formed on the scanner mount plate 111 and on which a tooth model 10 is installed, and an oral record transmitter 113 composed of a vertical part 113a vertically formed at the front end of the scanner mount plate 111 and positioned at the dead center of the front of the tooth model 10 installed on the jig body 112 and a position reference pointer 113b perpendicularly coupled to the vertical part 113a in a longitudinally movable pin type and having an end that comes in contact with the end of the incisor of the lower jawbone or the end of the incisor of the upper jawbone of the tooth model 10.

The scanner mount plate 111 has a flat plate shape and is mounted on a mounting point of a tooth model scanner. The scanner mount plate 111 has a structure that can be coupled to and separated from the mounting point of a tooth model scanner.

The jig body 112 is formed on the scanner mount plate 111 and the tooth model 10 can be installed on the jig body 112.

The tooth model 10 that is installed on the jig body 112 is characterized by being installed such that the end of the incisor of the lower jawbone or the end of the incisor of the upper jawbone of the tooth model 10 comes in contact with the end of the position reference pointer 113b of the oral record transmitter 113.

The oral record transmitter 113 is a device for transmitting the reference of the scan region of a tooth model scanner to the tooth model 10 that is installed on the jig body 112, and a tooth model scanner and the reference of the tooth model 10 are aligned by the oral record transmitter 113.

The oral record transmitter 113 is characterized by the vertical part 113a combined with the position reference pointer 113b as described above. The vertical part 113a is vertically formed at the front end of the scanner mount plate 111 and is coupled to be positioned at the dead center of the front of the tooth model 10 installed on the jig body 112. The position reference pointer 113b is perpendicularly coupled to the vertical part 113a in a longitudinally movable pin type and has an end that comes in contact with the end of the incisor of the lower jawbone or the end of the incisor of the upper jawbone of the tooth model 10.

The end of the position reference pointer 113b, as shown in the figures for describing the position reference pointer of a jig for scanning a tooth model, is set to be aligned with the reference point of the scan region of a tooth model scanner.

That is, the articulator for scanning a tooth model according to the present invention can obtain a virtual 3D tooth model with an aligned reference point by scanning the tooth model 10 using the tooth model scanner 3 after installing the tooth model 10 on the jig body 112 to be aligned with the position reference pointer 113b.

A fixing block 160 for fixing the articulator 110 is formed in the scanner and has a magnet, and prominences and depressions.

A tooth position recorder 170 that can be coupled to the articulator 110 and records the positions and angles of teeth is further included.

The tooth position recorder 170 is formed in a cross shape for accuracy of the positions and angles of teeth, and is coupled to be rotatable from the articulator 110.

When a tooth model is three-dimensionally scanned, the scanned shape has a specific position according to the scan position in the form of an STL file in a scan program.

There is an object that scans and stores a tooth model at a position and in a shape making it easy to fabricate a prosthesis that is ideal in terms of anatomy and occlusion in order to prevent deterioration of work efficiency and fabrication of an incorrect prosthesis due to the position and format of the file.

Further, there is an object that easily and quickly performs designing by storing artificial tooth model STL data in an appropriate format made in advance at an anatomically ideal tooth position when designing is performed using a tooth model file stored at an appropriate position.

According to the present invention, when a tooth model is scanned using a dental scanner, the work efficiency is maximized, and tooth model scan data are aligned with anatomically ideal vertical and horizontal axes in a design program using an articulator for scanning. Accordingly, it is possible to maximize the work efficiency by matching individual artificial tooth digital model data stored in an artificial tooth design program, several reference digital data models required for manufacturing artificial teeth, and X, Y, and Z (three-dimensional) coordinate positions.

According to the present disclosure, when a tooth model is scanned using a dental scanner, the tooth model is stored with the same shape and position fixed in the scanner as an STL file in a 3D space in a program, and this 3D space may be expressed by x, y, and z coordinates.

X is the transverse distance from the original point, Y is the lengthwise distance, and Z is the height.

For example, a coordinate having 10 in the transverse direction, 20 in the lengthwise direction, and 30 as the height can be expressed as (X 10, Y 20, Z 30).

This expression method is a fundamental expression method of a 3D space and expresses a distance and a position in a 3D design program.

Dental scanners and design programs are the same.

When a tooth model to be scanned in placed on dental scanner equipment and is scanned, the position of the tooth model on the scanner is digitalized by the distance from the original point (X 0, Y 0, Z 0) of the scanner and the position is stored in the form of an STL file.

The position of the tooth model STL file has different 3D positions in accordance with the position of the tooth model to be fixed.

The tooth model STL file stored at different 3D positions is not matched with the horizontal and vertical positions of the actual human body in an artificial tooth design program.

In this case, an optical illusion is caused in designing and there are many problems in fabrication of anatomical ideal artificial teeth.

In order to solve this problem, there is an object that provides a design system including: an articulator for scanning that can match the position of an STL file, which is tooth model scan data, with the anatomically ideal positions of teeth in a design program; anatomical ideal artificial tooth data; and a file that can be referred to in designing.

In order to achieve the objects, according to the present invention, a plaster tooth model is fixed on an articulator for scanning, the articulator is fixed in a scanner, and then scanning is performed. When the plastic tooth model is fixed on the articulator for scanning, a central incisor of the lower jawbone is aligned with a reference line marked on the articulator and a position indicator pin and then the plaster tooth model is fixed to the articulator using plaster. The positions and shapes of the position indication pins mounted on an artificial tooth fabrication system using an articulator for scanning a tooth model and on a scan design system articulator should be the same as the position and the shape of a scan position indication pin that is the original point (X 0, Y 0, Z 0) of the 3D space in a program.

The scan process is as follows.

A block for fixing an articulator is put and fixed in a scanner and an articulator for scanning is positioned using the magnet and prominences and depressions on the fixing block.

In this case, a plaster tooth model should be positioned in a specific scan region of the scanner.

Scan digital tooth shape data that have undergone this process has a 3D reference point similar to the anatomical position in an artificial tooth design program. When an artificial tooth library stored at the anatomical position is attached to the tooth shape, it is possible to completely reproduce appearance and occlusion that should be considered in designing.

The position indication pin is anatomically positioned at the end of the central incisor of the lower jawbone that is the reference point that is used when an artificial tooth is fabricated. When an anatomically ideal artificial tooth is fabricated, the tooth should be fabricated in with reference to the balkwill triangle connecting the mandibular condyle and the incisal edge of a lower incisor, the camper's plane connecting the incisal edge of a mandibular central incisor and the retromolar trigone, and the fh line connecting the lower edge of the ala nasi of the upper jawbone and the lower edge of the external auditory canal, in which the incisal edge point of the mandibular central incisor is the reference point. The STL file of the tooth model scanned in this way has the same position as an artificial tooth model STL file stored in the design program and a reference STL file that is the reference for designing an artificial tooth.

A method of storing the positions of 28 anatomically ideal tooth libraries and the position of a library that can be referred to in designing of artificial teeth in the artificial tooth design program is as follows. For models of individual teeth having anatomically ideal shapes or an ideal set of teeth of the individual teeth, an STL file is made in a CAD program and is stored in a folder or a security USB. The positions of the stored individual teeth in the 3D space of the artificial design program have 3D positions different from anatomical ideal positions. A scan original point recorder having an end point at the same position as the end point of the indication pin of the articulator is scanned by dental scan equipment.

The scan original point recorder that has performed scanning is stored in the form of an STL file in the dental design program. The end point of the scan original point recorder is set as a virtual 3D original point (X 0, Y 0, Z 0) under the assumption that it is the incisal point of the central incisor of the lower jawbone that is the anatomical reference point. On the basis of the position indication pin (mandibular incisal point) of the articulator stored in this way, the STL files of the individual teeth or the set of individual teeth are moved to respective positions and the stored in the anatomical ideal 3D space.

Further, a tooth position analysis plate and several STL files that are referred to in designing of teeth are stored in the same way at anatomically ideal positions. The tooth shapes stored in this way can be called back by the artificial tooth design program. The called-back tooth shapes are characterized by being placed at the anatomical ideal positions. When a tooth shape called back by the design program is referred to or attached in designing of an artificial tooth, it is possible to fabricate an anatomically ideal and functional dental prosthesis. The articulator for scanning should have a size that can be put into the specific scan region of the scanner. Further, the articulator for scanning should be easily separated into upper and lower parts and should be accurately aligned with a holding pin formed at the block for fixing the articulator.

As described above, the present invention has an effect that it is possible to prevent an optical illusion that may occur during designing by matching a plaster tooth model, an artificial tooth machine, a scanner, and oral anatomical horizontal and vertical positions that are shown like a virtual reality in a digital tooth design program that is used to fabricate artificial teeth in a scanner when scanning a tooth model, and it is possible to machine an accurate prosthesis using an artificial tooth machine on the basis of dental occlusion and dental aesthetics.

When the tooth position recorder is fixed to the articulator for scanning, is aligned with the reference line marked on the plaster model, and then the plaster tooth shape is fixed to the articulator for scanning, the actual vertical and horizontal sides of the teeth of the patient and the vertical and horizontal sides of the articulator for scanning are aligned. These X, Y, and Z coordinates should be reference points based on the theory of dental articulator and should have the same reference coordinates as the artificial tooth library stored in the design program.

Further, the tooth position record transmitter can be scanned and stored by an oral scanner, which is advantageous in terms of being able to fabricate artificial teeth without a plaster tooth shape.

When the upper jawbone and the lower jawbone are scanned by the oral scanner, the up-down relationship is obtained using the oral record transmitter, the oral record transmitter is scanned by the scanner, the scan data of the upper jawbone and the lower jawbone are repositioned to be matched to the shapes of upper and lower jawbones applied to the oral record transmitter, and then a file is stored, it is possible to fabricate a prosthesis in the same way as the method that uses a plaster tooth shape.

Artificial teeth fabricated on the basis of this principle undergo a scan process, a design process, and machining process, and the work process on the articulator with the same coordinates, so there is an advantage that it is possible to fabricate oral anatomically correct artificial teeth.

The output unit 120 is connected to the articulator 110 and matches and output the position data of the tooth model scanned by the sooth model scanner and the data storing the anatomically ideal positions on an image.

The reference mark 130 is composed of lines that can be vertically and horizontally analyzed.

In detail, the reference mark 130 is formed in a vertical-horizontal shape, that is, a cross shape and is provided with a predetermined gap maintained from a set of an upper jawbone tooth model 141 and a lower jawbone tooth model 142 to be described below.

The reference mark 130 is always a reference that can be quickly placed at the accurate position with respect to the set of the upper jawbone tooth model 141 and the lower jawbone tooth model 142 even if it is moved to another position under engagement at an anatomically ideal position.

The reference mark 130 is divided into three parts in the figures. One 110a of the three parts is modularized into one part with the upper jawbone tooth model 141, another one 110b is modularized into one part with the lower jawbone tooth model 142, and the other one 110c is modularized into one part with the tooth analyzer 150 to be described below.

The parts of the reference mark 130 are disposed with regular intervals outside the upper jawbone tooth model 141, the lower jawbone tooth model 142, and the tooth analyzer 150.

The reference mark 130 of the upper jawbone tooth model, reference mark 130 of the lower jawbone tooth model, and the reference mark 130 of the tooth analyzer are combined not to be deviated from each other when they are combined at the anatomically ideal position.

The tooth model unit 140 is composed of the upper jawbone tooth model 141 and the lower jawbone tooth model 142 designed by the digital tooth design program, and the upper jawbone tooth model 141 and the lower jawbone tooth model 142 are modularized with the reference mark 130 into one part, respectively.

Since digital upper jaw tooth models are individually positioned one by one at anatomically ideal positions in the related art, it takes long time to position them at the anatomically ideal positions.

However, since the upper jawbone tooth model 141 and the lower jawbone tooth model 142 are configured as a set in the present invention, there is an effect that the time is reduced through once movement, work is made convenient, and they can be arranged at accurate positions.

When the upper jawbone tooth model 141 and the lower jawbone tooth model 142 are moved, they are combined at anatomically ideal positions due to the reference marks 140 respectively modularized with the upper jawbone tooth model 141 and the lower jawbone tooth model 142 into one part.

When the upper jawbone tooth model 141 is placed at an anatomically ideal position earlier than the lower jawbone tooth model 142, the lower jawbone tooth model 142 is integrally combined with the reference mark 130 of the upper jawbone tooth model due to the reference marks 130 maintaining the regular intervals.

The tooth analyzer 150 is disposed between the upper jawbone tooth model and the lower jawbone tooth model.

In detail, the tooth analyzer 150 is formed in a plate shape with a first surface formed flat and a second surface curved. The tooth analyzer 150 of which the first surface is formed flat comes in contact with the upper jawbone model unit 140 and the curved second surface comes in contact with the lower jawbone mode unit 140.

The tooth analyzer 150 is modularized into one part with a predetermined gap maintained from the reference mark 130, similar to the upper jawbone tooth model 141 and the lower jawbone tooth model 142.

When the tooth analyzer 150 modularized with the reference mark 130 into one part is moved, the tooth analyzer 150 is combined at an anatomically ideal position together with the upper jawbone tooth model 141 and the lower jawbone tooth model 142.

The tooth analyzer 150 can analyze the sizes and the positions of the upper jawbone tooth model 141 and the lower jawbone tooth model 142.

In detail, the tooth analyzer 150 has pluralities of vertical grooves 151 and horizontal grooves 152, thereby being able to analyze the sizes and the positions of the upper jawbone tooth model 141 and the lower jawbone tooth model 142.

The tooth analyzer 150 is larger than the upper jawbone tooth model 141 and the lower jawbone tooth model 142, thereby being able to accurately analyze the sizes and positions of corresponding tooth models.

A controller 160 is connected to the reference mark 130, the tooth model unit 140, and the tooth analyzer 150, and simultaneously or selectively modularizes and controls the reference mark 130, the tooth model unit 140, and the tooth analyzer 150.

In detail, the controller 140 simultaneously or selectively modularizes and controls the reference mark 130, the tooth model unit 140, and the tooth analyzer 150.

Accordingly, modularization is temporarily controlled to control movement against unexpected events while the reference mark 130, the tooth model unit 140, and the tooth analyzer 150 are moved to anatomically ideal positions.

When removing an unexpected event while moving them to anatomically ideal positions, the controller 140 simultaneously or selectively modularizes and controls again the reference mark 130, the tooth model unit 140, and the tooth analyzer 150.

## Claims

1. A digital three-dimensional tooth model system (100) comprising:
an articulator (110) adapted to be mounted in a scan region of a tooth model scanner that creates virtual 3D tooth model data by scanning a tooth model, the articulator having a tooth model to be scanned installed thereon;
an output unit (120) connected to the articulator (110), and adapted to output an image by matching position data of a tooth model to be scanned by the tooth model scanner with data storing anatomically ideal positions;
a reference mark (130) composed of lines that can be vertically and horizontally analyzed;
a tooth model unit (140) composed of an upper jawbone tooth model (141) and a lower jawbone tooth model (142) designed by a digital tooth design program, and having modules each composed of the reference mark (130) and the upper jawbone tooth model (141) and the lower jawbone tooth model (142), respectively; and
a tooth analyzer (150) disposed between the upper jawbone tooth model (141) and the lower jawbone tooth model (142),
wherein the reference mark (130) is divided into a first part (110a) modularized into a part with the upper jawbone tooth model (141), a second part (110b) modularized into a part with the lower jawbone tooth model (143) and a third part (110c) modularized into a part with the tooth analyzer (150).

2. The digital three-dimensional tooth model system (100) of claim 1, further comprising a controller (160) connected to the reference mark (130), the tooth model unit (140), and the tooth analyzer (150),
wherein the controller (160) is adapted to simultaneously or selectively modularize and control the reference mark (130), the tooth model unit (140), and the tooth analyzer (150).

3. The digital three-dimensional tooth model system (100) of claim 1, wherein the articulator (110) includes:
a scanner mount plate (111) detachably installed in the scan region of the tooth model scanner;
a jig body (112) formed on the scanner mount plate (111) and having a tooth model installed thereon; and
an oral record transmitter (113) composed of a vertical part (113a) vertically formed at the front end of the scanner mount plate (111) and positioned at the dead center of the front of the tooth model installed on the jig body (112) and a position reference pointer (113b) perpendicularly coupled to the vertical part (113a) in a longitudinally movable pin type and having an end that comes in contact with the end of the incisor of the lower jawbone or the end of the incisor of the upper jawbone of the tooth model.

4. The digital three-dimensional tooth model system (100) of claim 1, wherein when the upper jawbone tooth model (141) and the lower jawbone tooth model (142) are moved, the upper jawbone tooth model (141) and the lower jawbone tooth model (142) are combined at an anatomically ideal position due to the reference marks (130) respectively modularized into one part with the upper jawbone tooth model (141) and the lower jawbone tooth model (142).

5. The digital three-dimensional tooth model system (100) of claim 1, wherein a fixing block for fixing the articulator (110) is formed in the scanner and has a magnet, and prominences and depressions.

6. The digital three-dimensional tooth model system (100) of claim 1, further comprising a tooth position recorder being able to be coupled to the articulator (110) and recording positions and angles of teeth.

7. The digital three-dimensional tooth model system (100) of claim 6, wherein the tooth position recorder is formed in a cross shape for accuracy of the positions and angles of teeth and is coupled to be rotatable from the articulator (110).

8. The digital three-dimensional tooth model system (100) of claim 1, wherein the tooth analyzer (150) is formed in a plate shape with a first surface formed flat and a second surface curved, the tooth analyzer (150) of which the first surface is formed flat comes in contact with the upper jawbone model unit, and the curved second surface comes in contact with the lower jawbone mode unit.

9. The digital three-dimensional tooth model system (100) of claim 1, wherein the tooth analyzer (150) is adapted to analyze sizes and positions of the upper jawbone tooth model (141) and the lower jawbone tooth model (142).

10. The digital three-dimensional tooth model system (100) of claim 1, wherein the tooth analyzer (150) has pluralities of vertical grooves and horizontal grooves, thereby being able to analyze sizes and positions of the upper jawbone tooth model (141) and the lower jawbone tooth model (142).

## Patentansprüche

1. Digitales dreidimensionales Zahnmodellsystem (100), das aufweist
einen Artikulator (110), der ausgebildet ist, in einem Scanbereich eines Zahnmodellscanners montiert zu werden, der virtuelle 3D-Zahnmodelldaten durch Scannen eines Zahnmodells erzeugt, wobei der Artikulator ein zu scannendes Zahnmodell darauf installiert hat;
eine Ausgabeeinheit (120), die mit dem Artikulator (110) verbunden ist und ausgebildet ist, ein Bild auszugeben, indem sie Positionsdaten eines von dem Zahnmodellscanner zu scannenden Zahnmodells mit Daten abgleicht, die anatomisch ideale Positionen speichern;
eine Referenzmarke (130), die aus Linien gebildet ist, die vertikal und horizontal analysiert werden können;
eine Zahnmodelleinheit (140), die aus einem Oberkieferknochen-Zahnmodell (141) und einem Unterkieferknochen-Zahnmodell (142) gebildet ist, die durch ein digitales Zahndesignprogramm entworfen wurden, und die Module aufweist, die jeweils aus der Referenzmarke (130) und dem Oberkieferknochen-Zahnmodell (141) bzw. dem Unterkieferknochen-Zahnmodell (142) gebildet sind; und
einen Zahnanalysator (150), der zwischen dem Oberkieferknochen-Zahnmodell (141) und dem Unterkieferknochen-Zahnmodell (142) angeordnet ist,
wobei die Referenzmarke (130) in einen ersten Teil (110a), der zu einem Teil mit dem Oberkieferknochen-Zahnmodell (141) modularisiert ist, einen zweiten Teil (110b), der zu einem Teil mit dem Unterkieferknochen-Zahnmodell (143) modularisiert ist, und einen dritten Teil (110c), der zu einem Teil mit dem Zahnanalysator (150) modularisiert ist, unterteilt ist.

2. Digitales dreidimensionales Zahnmodellsystem (100) nach Anspruch 1, umfassend ferner eine Steuereinheit (160), die mit der Referenzmarke (130), der Zahnmodelleinheit (140) und dem Zahnanalysator (150) verbunden ist,
wobei die Steuereinheit (160) ausgebildet ist, gleichzeitig oder selektiv die Referenzmarke (130), die Zahnmodelleinheit (140) und den Zahnanalysator (150) zu modularisieren und zu steuern.

3. Digitales dreidimensionales Zahnmodellsystem (100) nach Anspruch 1, wobei der Artikulator (110) umfasst:
eine Scanner-Montageplatte (111), die abnehmbar in dem Scanbereich des Zahnmodellscanners installiert ist;
einen Vorrichtungskörper (112), der auf der Scanner-Montageplatte (111) ausgebildet ist und ein darauf installiertes Zahnmodell aufweist; und
einen oralen Aufzeichnungssender (113), der aus einem vertikalen Teil (113a), der vertikal an dem vorderen Ende der Scanner-Montageplatte (111) ausgebildet und in dem Totpunkt der Vorderseite des auf dem Vorrichtungskörper (112) installierten Zahnmodells positioniert ist, und einem Positionsreferenzzeiger (113b) gebildet ist, der senkrecht mit dem vertikalen Teil (113a) in Form eines in Längsrichtung beweglichen Stifts gekoppelt ist und ein Ende aufweist, das mit dem Ende des Schneidezahns des Unterkiefers oder dem Ende des Schneidezahns des Oberkiefers des Zahnmodells in Kontakt kommt.

4. Digitales dreidimensionales Zahnmodellsystem (100) nach Anspruch 1, wobei beim Bewegen des Oberkieferknochen-Zahnmodells (141) und des Unterkieferknochen-Zahnmodells (142) das Oberkieferknochen-Zahnmodell (141) und das Unterkieferknochen-Zahnmodell (142) in einer anatomisch idealen Position aufgrund der Referenzmarkierungen (130) jeweils zu einem Teil mit dem Oberkieferknochen-Zahnmodell (141) und dem Unterkieferknochen-Zahnmodell (142) modularisiert werden.

5. Digitales dreidimensionales Zahnmodellsystem (100) nach Anspruch 1, wobei in dem Scanner ein Fixierblock zum Fixieren des Artikulators (110) ausgebildet ist, der einen Magneten sowie Erhebungen und Vertiefungen aufweist.

6. Digitales dreidimensionales Zahnmodellsystem (100) nach Anspruch 1, umfassend ferner einen Zahnpositionsrekorder, der mit dem Artikulator (110) gekoppelt werden kann und Positionen und Winkel von Zähnen aufzeichnet.

7. Digitales dreidimensionales Zahnmodellsystem (100) nach Anspruch 6, wobei der Zahnpositionsrekorder zur genauen Erfassung der Positionen und Winkel von Zähnen kreuzförmig ausgebildet und mit dem Artikulator (110) drehbar gekoppelt ist.

8. Digitales dreidimensionales Zahnmodellsystem (100) nach Anspruch 1, wobei der Zahnanalysator (150) in einer Plattenform ausgebildet ist mit einer ersten flach gebildeten Oberfläche und einer zweiten gekrümmten Oberfläche, wobei der Zahnanalysator (150), dessen erste Oberfläche flach gebildet ist, mit der oberen Kieferknochenmodelleinheit in Kontakt kommt und die gekrümmte zweite Oberfläche mit der unteren Kieferknochenmodelleinheit in Kontakt kommt.

9. Digitales dreidimensionales Zahnmodellsystem (100) nach Anspruch 1, wobei der Zahnanalysator (150) so ausgebildet ist, Größen und Positionen des Oberkieferknochen-Zahnmodells (141) und des Unterkieferknochen-Zahnmodells (142) zu analysieren.

10. Digitales dreidimensionales Zahnmodellsystem (100) nach Anspruch 1, wobei der Zahnanalysator (150) eine Vielzahl von vertikalen Nuten und horizontalen Nuten aufweist, wodurch er in der Lage ist, Größen und Positionen des Oberkieferknochen-Zahnmodells (141) und des Unterkieferknochen-Zahnmodells (142) zu analysieren.

## Revendications

1. Système de modèle dentaire numérique tridimensionnel (100) comprenant:
un articulateur (100) conçu pour être monté dans une région de balayage d'un scanner de modèle dentaire qui crée des données de modèle dentaire 3D virtuel par balayage d'un modèle dentaire, l'articulateur ayant un modèle dentaire sur lequel a été installé un modèle dentaire devant être scanné;
une unité de sortie (120) connectée à d'articulateur (110), et conçue pour délivrer une image par mise en correspondance des données d'un modèle dentaire devant être scanné par le scanner de modèle dentaire avec des données stockant des positions idéales en termes d'anatomie;
un repère de référence (130) composé de lignes qui peuvent être analysées verticalement ou horizontalement;
un ensemble de modèles dentaires (140) composé d'un modèle dentaire de mâchoire supérieure (141) et d'un modèle dentaire de mâchoire inférieure (142) conçu par un programme de conception numérique dentaire, et ayant des modèles, chacun, composés du repère de référence (130) et du modèle dentaire de mâchoire supérieure (141) et du modèle dentaire de mâchoire inférieure (142), respectivement; et
un analyseur dentaire (150) disposé entre le modèle dentaire de mâchoire supérieure (141) et le modèle dentaire de mâchoire inférieure (142),
dans lequel le repère de référence (130) est divisé en une première partie (110a) modularisée en une partie avec le modèle dentaire de mâchoire supérieure (141), une deuxième partie (110b) modularisée en une partie avec le modèle dentaire de mâchoire inférieure (142) et une troisième partie (110c) modularisée dans une partie avec l'analyseur dentaire (150).

2. Système de modèle dentaire numérique tridimensionnel (100) selon la revendication 1, comprenant en outre un organe de commande (160) connecté au repère de référence (130), à l'ensemble de modèle dentaire (140) et à l'analyseur dentaire (150),
dans lequel l'organe de commande (1-0) est conçu pour modulariser simultanément ou sélectivement et pour commander le repère de référence (130), l'ensemble de modèle dentaire (140) et l'analyseur dentaire (150).

3. Système de modèle dentaire numérique tridimensionnel (100) selon la revendication 1, dans lequel l'articulateur (110) comprend:
une plaque de support de scanner (111) installée amovible dans la région de balayage du scanner de modèle dentaire;
un corps de gabarit (112) formé sur la plaque de support de scanner (111) sur lequel est installé un modèle dentaire; et
un transmetteur d'enregistrement buccal (113) composé d'une partie verticale (113a) formée verticalement sur l'extrémité avant de la plaque de support de scanner (111) et positionnée en plein milieu de l'avant du modèle dentaire installé sur le corps de gabarit (112) et un pointeur de référence de position (113b) accouplé perpendiculairement à la partie verticale (113a) dans un type de tige mobile longitudinalement et ayant une extrémité qui vient en contact avec l'extrémité de l'incisive de la mâchoire inférieure ou l'extrémité de l'incisive de la mâchoire supérieure du modèle dentaire.

4. Système de modèle dentaire numérique tridimensionnel (100) selon la revendication 1, dans lequel le modèle dentaire de mâchoire supérieure (141) et le modèle dentaire de mâchoire inférieure (142) sont déplacés, le modèle dentaire de mâchoire supérieure (141) et le modèle dentaire de mâchoire inférieure (142) sont combinés dans une position idéale en terme d'anatomie au moyen des repères de référence (130) respectivement modularisés en une partie avec le modèle dentaire de mâchoire supérieure (141) et le modèle dentaire de mâchoire inférieure (142).

5. Système de modèle dentaire numérique tridimensionnel (100) selon la revendication 1, dans lequel un bloc de fixation servant à fixer l'articulateur (110) est formé dans le scanner et a un aimant, et des saillies et des évidements.

6. Système de modèle dentaire numérique tridimensionnel (100) selon la revendication 1, comprenant en outre un enregistreur de position de dent qui est capable d'être accouplé à l'articulateur (110) et d'enregistrer des positions et des angles de dents.

7. Système de modèle dentaire numérique tridimensionnel (100) selon la revendication 6, dans lequel l'enregistreur de position de dent est formé dans une forme croisée pour la précision des positions et des angles de dents et est accouplé pour pouvoir tourner par rapport à l'articulateur (110).

8. Système de modèle dentaire numérique tridimensionnel (100) selon la revendication 1, dans lequel l'analyseur de dent (150) se présente sous une forme plate avec une première surface plate et une seconde surface incurvée, l'analyseur de dent (150) dont la première surface est plate vient en contact avec l'unité de modèle de mâchoire supérieure, et la seconde surface incurvée vient en contact avec l'unité de modèle de mâchoire inférieure.

9. Système de modèle dentaire numérique tridimensionnel (100) selon la revendication 1, dans lequel l'analyseur dentaire (150) est conçu pour analyser les tailles et les positions du modèle dentaire de mâchoire supérieure (141) et du modèle dentaire de mâchoire inférieure (142).

10. Système de modèle dentaire numérique tridimensionnel (100) selon la revendication 1, dans lequel l'analyseur dentaire (150) a une pluralité de rainures verticales et de rainures horizontales, étant ainsi capable d'analyser les tailles et les positions du modèle dentaire de mâchoire supérieure (141) et du modèle dentaire de mâchoire inférieure (142).
